# EUROPÄISCHE PATENTSCHRIFT

(11) **EP 3 981 550 B1**
(45) Veröffentlichungstag und Bekanntmachung des Hinweises auf die Patenterteilung: **05.07.2023**
(21) Anmeldenummer: 21196315.2
(22) Anmeldetag: 13.09.2021
(51) Int. Cl.: B25F 5/02

(54) **HANDWERKZEUGMASCHINE**
HANDHELD POWER TOOL
MACHINE-OUTIL PORTATIVE

(30) Priorität: 08.10.2020 DE 102020212708
(43) Veröffentlichungstag der Anmeldung: 13.04.2022
(73) Patentinhaber: Robert Bosch GmbH, 70442 Stuttgart (DE)
(72) Erfinder: Blum, Jens, 70794 Filderstadt (DE); Herr, Tobias, 70569 Stuttgart (DE); Erbele, Simon, 71154 Nufringen (DE)

(56) Entgegenhaltungen:
- DE-U1-202012 005 736
- DE-U1-202014 006 507
- US-A1- 2013 105 188
- US-A1- 2014 008 088
- US-A1- 2020 223 038
- US-B2- 10 478 950

## Beschreibung

Die vorliegende Erfindung betrifft eine Handwerkzeugmaschine nach dem Oberbegriff des Anspruches 1.

### Stand der Technik

Aus dem Stand der Technik ist bereits eine Handwerkzeugmaschine mit einer Antriebseinheit, mit einem Gehäuse und mit zumindest einer Benutzerschnittstelle bekannt. Die Antriebseinheit ist mittels zumindest eines Handschalters betätigbar. Die Benutzerschnittstelle umfasst zumindest ein Bedienelement. Eine Handwerkzeugmaschine nach dem Oberbegriff des Anspruchs 1 ist aus der DE20 2012 005736 U1 bekannt.

### Offenbarung der Erfindung

Die vorliegende Erfindung geht aus von einer Handwerkzeugmaschine mit einer Antriebseinheit, wobei die Antriebseinheit mittels zumindest eines Handschalters betätigbar ist, mit einer Steuereinheit zumindest zur Steuerung der Antriebseinheit, wobei die Steuereinheit ein Steuereinheitengehäuse aufweist, mit zumindest einer Benutzerschnittstelle , wobei die Benutzerschnittstelle zumindest ein Bedienelement umfasst, und mit einem Gehäuse, wobei das Gehäuse zumindest die Steuereinheit und die Benutzerschnittstelle zumindest teilweise aufnimmt. Es wird vorgeschlagen, dass die Handwerkzeugmaschine eine Positioniervorrichtung aufweist, wobei die Benutzerschnittstelle unter Verwendung der Positioniervorrichtung sich an dem Steuereinheitengehäuse abstützt.

Die Erfindung stellt eine kompakte Handwerkzeugmaschine bereit, indem eine Positioniervorrichtung vorgesehen ist, die eine Benutzerschnittstelle an einem Steuereinheitengehäuse abstützt. Insbesondere ermöglicht die Erfindung eine gerine Fußhöhe eines Gehäuses der Handwerkzeugmaschine.

Die Handwerkzeugmaschine kann als eine elektrisch oder pneumatisch betriebene Handwerkzeugmaschine ausgebildet sein. Die elektrisch betriebene Handwerkzeugmaschine kann dabei als eine netzbetriebene oder als eine akkubetriebe Handwerkzeugmaschine ausgebildet sein. Beispielsweise kann die Handwerkzeugmaschine als ein Schrauber, ein Druckluftschrauber, ein Bohrschrauber, ein Drehschlagschrauber, ein Hammer, ein Bohrhammer, ein Druckluftdrehschlagschrauber oder ein Schlagbohrschrauber ausgebildet sein.

Die Antriebseinheit ist derart ausgestaltet, dass sie über den Handschalter betätigbar ist. Wird der Handschalter durch einen Benutzer betätigt, wird die Antriebseinheit eingeschalten und die Handwerkzeugmaschine wird in Betrieb genommen. Wird entsprechend der Handschalter durch den Benutzer nicht weiter betätigt, wird die Antriebseinheit ausgeschaltet. Bevorzugt ist die Antriebseinheit derart elektronisch steuer- und/oder regelbar, dass ein Reversierbetrieb und eine Vorgabe für eine gewünschte Drehgeschwindigkeit realisierbar sind. Es ist auch denkbar, dass es sich bei dem Handschalter um einen einrastbaren Handschalter handelt, der in zumindest einem Betätigungszustand in zumindest einer Position einrastbar ist. Im Reversierbetrieb kann die Antriebseinheit zwischen einer Rechtslaufdrehrichtung und einer Linkslaufdrehrichtung umschaltbar sein. Zur Umschaltung der Antriebseinheit im Reversierbetrieb kann die Handwerkzeugmaschine ein Drehrichtungsumschaltelement, insbesondere einen Drehrichtungsumschalter, aufweisen.

Die Antriebseinheit umfasst zumindest einen Antriebsmotor und kann in einer Ausführungsform zumindest ein Getriebe aufweisen. Der Antriebsmotor kann insbesondere als zumindest ein Elektromotor ausgebildet sein. Das Getriebe kann als zumindest ein Planetengetriebe ausgebildet sein, wobei es beispielsweise schaltbar sein kann. Bei einem schaltbaren Getriebe kann zwischen zumindest zwei Gangstufen mittels zumindest eines Gangumschaltelements, insbesondere eins Gangumschalters, umgeschaltet werden. Die Erfindung kann auch bei anderen Motorenarten oder Getriebearten zur Anwendung kommen. Zusätzlich umfasst die Handwerkzeugmaschine eine Energieversorgung, wobei die Energieversorgung für einen Akkubetrieb mittels Akkus, insbesondere Handwerkzeugmaschinenakkupacks, und/oder für einen Netzbetrieb vorgesehen ist. In einer bevorzugten Ausführungsform ist die Energieversorgung für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Li-Ion-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Handwerkzeugmaschine als auch der Betrieb als netzbetriebene Handwerkzeugmaschine sind dem Fachmann hinreichend bekannt, weshalb hier nicht auf die Einzelheiten der Energieversorgung eingegangen wird.

Die Handwerkzeugmaschine kann ein Schlagwerk aufweisen. Das Schlagwerk erzeugt während des Betriebs hohe Drehmomentspitzen, um so festsitzende Verbindungsmittel zu lösen oder Verbindungsmittel zu befestigen. Das Schlagwerk kann mittels dem Getriebe mit dem Antriebsmotor verbunden sein. Das Schlagwerk kann beispielsweise als ein Rotationsschlagwerk, ein Rastenschlagwerk, ein Drehschlagwerk oder ein Hammerschlagwerk ausgebildet sein.

Die Handwerkzeugmaschine kann eine Werkzeugaufnahme zur Aufnahme eines Einsatzwerkzeugs aufweisen. Die Werkzeugaufnahme kann als eine Werkzeuginnenaufnahme, wie beispielsweise eine Bitaufnahme, als eine Werkzeugaußenaufnahme, wie beispielsweise eine Nussaufnahme, oder als ein Bohrfutter ausgebildet sein. Die Werkzeugaufnahme kann Einsatzwerkzeuge, wie beispielsweise Schraubbits oder Steckschlüssel, aufnehmen, sodass ein Benutzer Schraubverbindungen von einem Befestigungselement mit einem Befestigungsträger herstellen kann.

Die Steuereinheit der Handwerkzeugmaschine ist zumindest zur Steuerung der Antriebseinheit ausgebildet. Hierbei kann die Steuereinheit Schaltsignale empfangen, die mittels des Handschalters erzeugt werden. Es ist denkbar, dass die Steuereinheit die Schaltsignale des Handschalters verarbeitet, bevor die Steuereinheit die Schaltsignale an die Antriebseinheit zur Steuerung weiterleitet. Zudem ist die Steuereinheit dazu ausgebildet, Benutzerschnittstellensignale von der Benutzerschnittstelle zu empfangen, diese zu verarbeiten und auszugeben. Die Steuereinheit verarbeitet die Benutzerschnittstellensignale in zumindest ein Ausgabesignal und gibt dieses aus. Das Ausgabesignal kann dann an die Benutzerschnittstelle gesendet werden und/oder die Antriebseinheit steuern und/oder regeln. Die Steuereinheit kann zumindest einen Mikroprozessor oder einen Mikrocontroller umfassen.

Die Handwerkzeugmaschine weist die Benutzerschnittstelle mit dem Bedienelement auf. Insbesondere ist die Benutzerschnittstelle an dem Gehäuse angeordnet. Die Benutzerschnittstelle kann eine Schnittstelle zwischen dem Benutzer und der Handwerkzeugmaschine sein. Das Bedienelement ist dazu ausgebildet, Eingaben durch den Benutzer zu empfangen. Vorteilhafter Weise dient das Bedienelement zumindest zur Einstellung zumindest eines Betriebsmodus, insbesondere einer Drehzahlstufe, und/oder zumindest zur Steuerung und/oder Regelung einer Arbeitsstellenbeleuchtungseinheit. Es ist denkbar, dass das Bedienelement auch zur Einstellung eines durch den Benutzer zuweisbaren Betriebsmodus belegbar ist. Weiter kann das Bedienelement auch zur Einstellung eines weiteren, dem Fachmann als sinnvoll erscheinenden, Betriebsmodus dienen.

Die Benutzerschnittstelle kann die Arbeitsstellenbeleuchtungseinheit aufweisen. Die Arbeitsstellenbeleuchtungseinheit umfasst ein Leuchtmittel und ein Lichtleitelement. Die Arbeitsstellenbeleuchtungseinheit ist dazu ausgebildet, Licht auszusenden. Weiter wird das Licht bevorzugt zu einem unmittelbar vor der Handwerkzeugmaschine liegenden Arbeitsstellenbereich ausgesandt. Hierbei kann eine Beleuchtung des Arbeitsstellenbereichs wie auch des Einsatzwerkzeuges erfolgen. Beispielsweise kann es sich bei dem Leuchtmittel um zumindest eine LED handeln. Das Leuchtmittel sendet das Licht aus. Das Lichtleitelement ist dazu ausgebildet, Licht zu leiten. Weiter ist das Lichtleitelement dazu vorgesehen, das Licht zu brechen und an den Arbeitsstellenbereich zu leiten. Bevorzugt kann das Lichtleitelement als ein Lichtfokussierelement, insbesondere eine Fokussierlinse, ausgebildet sein. Es ist denkbar, dass das Leuchtmittel und das Lichtleitelement einstückig ausgebildet sind, dass in einer Ausführungsform die zumindest eine LED das Lichtfokussierelement, insbesondere die Fokussierlinse, ausbildet.

Die Benutzerschnittstelle kann die Eingaben durch den Benutzer in ein, insbesondere elektrisches, Benutzersignal umwandeln. Anschließend kann die Benutzerschnittstelle das Benutzersignal an die Steuereinheit weiterleiten. Die Benutzerschnittstelle kann zudem auch Informationen mittels zumindest einem Anzeigeelement anzeigen. Vorteilhafterweise weist die Benutzerschnittstelle das Anzeigeelement auf. Das Anzeigeelement ist dazu ausgebildet, zumindest eine Information zu einem Betriebszustand, dem Betriebsmodus und/oder einer Betriebsinformation anzuzeigen. Das Anzeigeelement kann als ein Leuchtmittel und/oder als ein Display, oder weitere, dem Fachmann als sinnvoll erscheinende, Anzeigeelemente ausgebildet sein. In einer Ausführungsform kann das Anzeigeelement drei LEDs für die Anzeige der Drehzahlstufe aufweisen.

Der Betriebszustand kann beispielsweise "eingeschalten" oder "ausgeschalten" sein. Der Betriebsmodus kann beispielhaft zumindest eine Drehzahl, zumindest eine Drehzahlstufe oder zumindest eine Schlagenergie sein. Beispiele für die Betriebsinformation sind "Pairing mit einem elektrischen Gerät", "verbunden mit einem elektrischen Gerät", "unverbunden mit einem elektrischen Gerät" oder zumindest ein Batterieladezustand. Zudem sind auch weitere Beispiele für Betriebszustände, Betriebsmodi und/oder Betriebsinformationen möglich, die dem Fachmann als sinnvoll erscheinen.

In einer Ausführungsform umfasst die Benutzerschnittstelle zumindest ein weiteres Bedienelement. In einer ähnlichen Weise wie das Bedienelement, kann das weitere Bedienelement zumindest zur Einstellung zumindest eines Betriebsmodus, insbesondere einer Drehzahlstufe, und/oder zumindest zur Steuerung und/oder Regelung der Arbeitsstellenbeleuchtungseinheit dienen. Hierbei kann das Bedienelement und/oder das weitere Bedienelement die Arbeitsstellenbeleuchtungseinheit einschalten oder ausschalten, wie auch eine Leuchtleistung, insbesondere eine Helligkeit, kontinuierlich oder inkrementell, erhöhen oder erniedrigen.

Das Bedienelement ist ein von dem Benutzer betätigbares Bedienelement, über das der Benutzer zumindest den Betriebszustand, den Betriebsmodus und/oder die Betriebsinformation verändern kann. Das Bedienelement kann als zumindest ein Drückerelement, als zumindest ein Schiebeelement, als zumindest ein Drehelement oder aber als zumindest ein Kippelement ausgebildet sein. Auch weitere Ausführungsformen des zumindest einen Bedienelementes sind denkbar. Das zumindest eine Drückerelement ist dazu ausgebildet, von einem Benutzer gedrückt zu werden. Das zumindest eine Schiebeelement ist dazu vorgesehen, von einem Benutzer verschoben zu werden. Das zumindest eine Drehelement ist dazu ausgebildet, von einem Benutzer gedreht zu werden. Das zumindest eine Kippelement ist dazu vorgesehen, von einem Benutzer gekippt zu werden. Je nach Ausführungsform ist auch eine Kombination aus den genannten Bedienelementen möglich.

In einer Ausführungsform weist das Bedienelement und/oder das weitere Bedienelement zumindest ein Rückstellelement auf. Das Rückstellelement ist dazu vorgesehen, das Bedienelement und/oder das weitere Bedienelement in zumindest eine Neutralposition zu führen. Die Neutralposition zeichnet sich dadurch aus, dass das Bedienelement und/oder das weitere Bedienelement in der Neutralposition betätigbar ist. Insbesondere weist das Rückstellelement zumindest eine rückstellende Wirkung auf, sodass nach der zumindest einen Betätigung das Bedienelement und/oder das weitere Bedienelement in die Neutralposition geführt wird. Anschließend ist das Bedienelement und/oder das weitere Bedienelement in der Neutralposition angeordnet, sodass zumindest eine nächste Betätigung ermöglicht wird. Bevorzugt ist das Rückstellelement als zumindest ein Federelement ausgebildet. Das Federelement kann als eine kuppelförmige Feder, eine Spiralfeder, ein scharnierartiger Hebel oder dergleichen ausgebildet sein.

Das Gehäuse nimmt die Steuereinheit und die Benutzerschnittstelle zumindest teilweise auf. Hierbei soll "zumindest teilweise" derart verstanden werden, dass das Gehäuse zumindest einen Teil der Steuereinheit und der Benutzerschnittstelle aufnimmt. Das Gehäuse weist zumindest eine Aufnahme für die Steuereinheit auf. Hierbei umgreift die Aufnahme für die Steuereinheit das Steuereinheitengehäuse zumindest teilweise. Die Aufnahme für die Steuereinheit ist hier beispielhaft als Rippen ausgebildet.

Die Rippen sind hier beispielhaft einstückig mit dem Gehäuse ausgeformt. Das Steuereinheitengehäuse ist zumindest dazu ausgebildet, die Steuereinheit im Gehäuse anzuordnen. Das Steuereinheitengehäuse kann nach Art einer Schale, eines Bechers, eines Tellers oder dergleichen ausgeformt sein. Zudem nimmt das Gehäuse die Antriebseinheit und das optionale Schlagwerk auf.

In einer Ausführungsform weist das Gehäuse zumindest eine Energieversorgungshaltevorrichtung, insbesondere eine Handwerkzeugmaschinenakkupackhaltevorrichtung, auf, an der die Benutzerschnittstelle angeordnet ist. Die Energieversorgungshaltevorrichtung ist insbesondere dazu ausgebildet, die Energieversorgung, insbesondere den Handwerkzeugmaschinenakkupack, zu halten, insbesondere aufzunehmen. Zusätzlich ist die Energieversorgungshaltevorrichtung dazu vorgesehen, die Energieversorgung, insbesondere den Handwerkzeugmaschinenakkupack, werkzeugfrei lösbar mit dem Gehäuse zu verbinden und die Energieversorgung der Handwerkzeugmaschine sicherzustellen. Die Energieversorgungshaltevorrichtung bildet mit einem verbundenen Handwerkzeugmaschinenakkupack zumindest einen Standfuß mit zumindest einer Standfläche aus. Insbesondere kann die Handwerkzeugmaschine mittels dem Standfuß auf einer Standfläche gelagert, insbesondere gestellt, werden. Das Gehäuse umfasst zudem einen Handgriff. Der Handgriff ist dazu ausgebildet, von dem Benutzer ergriffen zu werden, um die Handwerkzeugmaschine einzusetzen. Die Energieversorgungshaltevorrichtung ist insbesondere an dem Handgriff angeordnet.

Die Benutzerschnittstelle ist vorteilhafter Weise an der Energieversorgungshaltevorrichtung angeordnet. Insbesondere ist die Benutzerschnittstelle derart an der Energieversorgungshaltevorrichtung angeordnet, dass die Arbeitsstellenbeleuchtungseinheit der Benutzerschnittstelle eine möglichst große Beleuchtung des Arbeitsstellenbereichs bereitstellen kann.

Alternativ kann die Benutzerschnittstelle auch an dem Handgriff, insbesondere im Bereich des Handschalters, angeordnet sein oder aber bei einer Werkzeugaufnahme.

Die Handwerkzeugmaschine weist die Positioniervorrichtung auf. Die Positioniervorrichtung ist dazu ausgebildet, die Benutzerschnittstelle an dem Steuereinheitengehäuse abzustützen. Hierzu kann die Benutzerschnittstelle, insbesondere direkt und unmittelbar, an der Positioniervorrichtung anliegen. Die Positioniervorrichtung ist dazu ausgebildet, die Benutzerschnittstelle relativ zu dem Steuereinheitengehäuse anzuordnen und in einer Relativposition positioniert zu halten. Dabei soll unter der "Relativposition" eine relative Position, insbesondere Anordnung, von der Benutzerschnittstelle zu dem Steuereinheitengehäuse im Gehäuse verstanden werden. Die Positioniervorrichtung kann die Benutzerschnittstelle unter einem vorgegebenen Winkel und/oder einem vorgegebenen Abstand zu dem Steuereinheitengehäuse anordnen und positioniert halten.

In einer Ausführungsform der Handwerkzeugmaschine weist die Positioniervorrichtung zumindest ein Positionierelement auf, wobei das Positionierelement dazu ausgebildet ist, die Benutzerschnittstelle zumindest abschnittsweise überlappend zur Steuereinheit anzuordnen. Das Positionierelement ist derart ausgebildet, dass die Benutzerschnittstelle zumindest abschnittsweise das Steuereinheitengehäuse überlappt. Hier soll als "zumindest abschnittsweise überlappend" verstanden werden, dass zumindest ein Abschnitt der Benutzerschnittstelle die Steuereinheit, insbesondere das Steuereinheitengehäuse, überlappt. Zudem ist das Positionierelement dazu vorgesehen, die Benutzerschnittstelle in der Relativposition zu der Steuereinheit, insbesondere dem Steuereinheitengehäuse, anzuordnen und positioniert zu halten. Es ist denkbar, dass eine Mehrzahl an Positionierelementen vorgesehen ist, beispielsweise zwei, drei oder mehr als drei.

In einer Ausführungsform der Handwerkzeugmaschine greift das Positionierelement zumindest teilweise in die Benutzerschnittstelle ein. Hierdurch positioniert das Positionierelement die Benutzerschnittstelle relativ zu der Steuereinheit, insbesondere dem Steuereinheitengehäuse. Die Benutzerschnittstelle kann zumindest eine Aufnahme aufweisen, in die das Positionierelement zumindest teilweise eingreift. Das Positionierelement kann dabei eine form- und/oder kraftschlüssige Verbindung mit der Benutzerschnittstelle, insbesondere der Aufnahme der Benutzerschnittstelle, ausbilden.

In einer alternativen Ausführungsform ist auch denkbar, dass das Positionierelement eine stoffschlüssige Verbindung mit der Benutzerschnittstelle ausbildet.

In einer Ausführungsform der Handwerkzeugmaschine weist die Benutzerschnittstelle eine Benutzerschnittstellenplatine auf, wobei die Benutzerschnittstellenplatine zumindest eine Durchgangsöffnung umfasst, und das Positionierelement dazu ausgebildet ist, durch die Durchgangsöffnung durchzugreifen. Die Benutzerschnittstellenplatine ist dazu ausgebildet, die Eingaben durch den Benutzer in das Benutzersignal umzuwandeln. Hierzu kann die Benutzerschnittstellenplatine zumindest einen Mikroprozessor oder einen Mikrocontroller aufweisen. Die Benutzerschnittstellenplatine kann zumindest ein Schaltelement und zumindest das Lichtelement aufweisen. Das Schaltelement kann als ein Taster oder ein Schalter ausgeformt sein. Das Schaltelement ist dazu vorgesehen von dem Bedienelement betätigt zu werden. Es ist denkbar, dass die Benutzerschnittstellenplatine zumindest ein weiteres Schaltelement aufweist. Das weitere Schaltelement ist dazu vorgesehen, von dem weiteren Bedienelement betätigt zu werden. Das Lichtelement der Arbeitsstellenbeleuchtungseinheit kann auf der Benutzerschnittstellenplatine angeordnet sein.

Das Positionierelement kann die Benutzerschnittstellenplatine relativ zu der Steuereinheit, insbesondere dem Steuereinheitengehäuse, anordnen, indem das Positionierelement durch die Durchgangsöffnung durchgreift. Die Benutzerschnittstellenplatine bildet die Durchgangsöffnung aus. Hierbei kann die Durchgangsöffnung beispielsweise als eine Ausnehmung, als eine Durchgangsbohrung oder dergleichen ausgeformt sein. Die Durchgangsöffnung kann an einer im Wesentlichen beliebigen Position auf der Benutzerschnittstellenplatine ausgeformt sein. Zudem kann auch eine Mehrzahl an Durchgangsöffnungen vorgesehen sein, wie beispielsweise zwei oder drei. Die Durchgangsöffnung kann hierbei kreisförmig, ovalförmig, mehreckig, schlitzartig oder dergleichen ausgebildet sein. Die Durchgangsöffnung ist dazu vorgesehen, das Positionierelement derart aufzunehmen, dass das Positionierelement durch die Durchgangsöffnung durchgreifen kann. Es ist denkbar, dass das Positionierelement und die Durchgangsöffnung eine form- und/oder kraftschlüssige Verbindung ausbilden.

In einer Ausführungsform der Handwerkzeugmaschine weist die Benutzerschnittstelle zumindest ein Trägerelement auf, wobei das Trägerelement zumindest ein Aufnahmeelement umfasst, und das Positionierelement in das Aufnahmeelement des Trägerelements eingreift. Das Positionierelement positioniert das Trägerelement relativ zu der Steuereinheit, insbesondere dem Steuereinheitengehäuse, indem das Positionierelement in das Trägerelement eingreift. Das Trägerelement weist das Aufnahmeelement auf, wobei das Aufnahmeelement beispielsweise als eine Ausnahme, eine Öffnung, eine Kerbe, als eine Nut oder dergleichen ausgebildet sein kann. Hierbei kann das Aufnahmeelement beispielsweise topfartig oder schalenartig ausgeformt sein. Es ist denkbar, dass das Aufnahmeelement einstückig mit dem Trägerelement ist. Das Trägerelement kann das Lichtleitelement der Arbeitsstellenbeleuchtungseinheit, das Bedienelement und/oder das weitere Bedienelement aufweisen. Es ist denkbar, dass das Lichtleitelement durch das Trägerelement umspritzt ist. Weiter ist denkbar, dass das Anzeigeelement durch das Trägerelement umspritzt ist. Zudem ist möglich, dass das Bedienelement und/oder das weitere Bedienelement einstückig mit dem Trägerelement ist. Es ist denkbar, dass das Trägerelement eine Mehrzahl an Aufnahmeelementen aufweist, wie beispielsweise zwei oder drei.

Das Positionierelement kann mit dem Aufnahmeelement des Trägerelements eine form- und/oder kraftschlüssige Verbindung ausbilden. Dabei kann das Positonierelement mit dem Aufnahmeelement des Trägerelements beispielsweise eine Schnapp-, eine Haken-, eine Rast-, eine Schraub-, eine Bajonett- oder eine Steckverbindung ausbilden.

Denkbar ist auch, dass das Positionierelement eine stoffschlüssige Verbindung mit dem Trägerelement ausformt.

In einer Ausführungsform der Handwerkzeugmaschine ist das Positionierelement stiftartig ausgebildet. Hierbei kann das Positioniereleement beispielsweise nach Art eines Stifts, eines Stabs oder dergleichen ausgeformt sein. Es ist möglich, dass das Positionierelement eine zylindrische oder eine mehreckige Form aufweist.

Beispielsweise können zwei stiftartige Positionierelemente vorgesehen sein, die durch zwei Durchgangsöffnungen der Benutzerschnittstellenplatine durchgreifen und in zwei Aufnahmeelemente des Trägerelements eingreifen.

In dieser beispielhaften Ausführungsform weist die Benutzerschnittstelle das Trägerelement und die Benutzerschnittstellenplatine auf. Dabei umfasst das Trägerelement das Bedienelement, das weitere Bedienelement, das Anzeigeelement und das Lichtleitelement. Das Bedienelement und das weitere Bedienelement sind hierbei als scharnierartige Hebel ausgeformt. Das Anzeigeelement und das Lichtleitelement sind hier von dem Trägerelement umspritzt. Die Benutzerschnittstellenplatine umfasst das Schaltelement, das weitere Schaltelement und das Lichtelement. Hier liegt das Trägerelement an der Benutzerschnittstellenplatine an. Es ist jedoch denkbar, dass das Trägerelement mit der Benutzerschnittstellenplatine eine form-, kraft- und/oder stoffschlüssige Verbindung ausbildet. Weiter ist denkbar, dass das Trägerelement auf die Benutzerschnittstellenplatine aufgesteckt ist. Es ist möglich, dass das Trägerelement sich an der Benutzerschnittstellenplatine über ein weiteres Bauteil, wie beispielsweise eine Dichtung, abstützt.

In einer Ausführungsform der Handwerkzeugmaschine umgreift das Positionierelement die Benutzerschnittstelle, insbesondere das Trägerelement und/oder die Benutzerschnittstellenplatine, zumindest teilweise. Das Positionierelelement positioniert die Benutzerschnittstelle, insbesondere das Trägerelement und/oder die Benutzerschnittstellenplatine, relativ zu der Steuereinheit, insbesondere dem Steuereinheitengehäuse, indem das Positionierelement die Benutzerschnittstelle zumindest teilweise umgreift. Hier soll "zumindest teilweise umgreift" derart verstanden werden, dass das Positionierelement die Benutzerschnittstelle zumindest teilweise umrandet und an der Benutzerschnittstelle zumindest teilweise anliegt. Dabei kann das Positionierelement beispielsweise eine form-, kraft- und/oder stoffschlüssige Verbindung mit der Benutzerschnittstelle ausbilden. Es ist auch denkbar, dass Positionierelement das Trägerelement oder die Benutzerschnittstellenplatine zumindest teilweise umgreift.

In einer Ausführungsform der Handwerkzeugmaschine ist das Positionierelement als ein zumindest teilweise umlaufender Rahmen ausgebildet. Hierdurch kann das Postionierelement die Benutzerschnittstelle, insbesondere das Trägerelement und/oder die Benutzerschnittstellenplatine, relativ zu der Steuereinheit, insbesondere dem Steuereinheitengehäuse, positionieren. Der zumindest teilweise umlaufende Rahmen kann an der Benutzerschnittstelle, insbesondere an dem Trägerelement und/oder der Benutzerschnittstellenplatine, anliegen.

In einer Ausführungsform der Handwerkzeugmaschine weist die Positioniervorrichtung zumindest ein Abstützelement auf, wobei die Benutzerschnittstelle, insbesondere das Trägerelement und/oder die Benutzerschnittstellenplatine, an dem Abstützelement anliegt und das Abstützelement dazu ausgebildet ist, auftretende Bedienkräfte in das Gehäuse abzuleiten. Die Benutzerschnittstelle, insbesondere das Trägerelement und/oder die Benutzerschnittstellenplatine, liegt an dem Abstütztelement an. Das Abstützelement ist dazu ausgebildet, die auftretenden Bedienkräfte aufzunehmen und dabei zu verhindern, dass sich die Benutzerschnittstelle, insbesondere das Trägerelement und/oder die Benutzerschnittstellenplatine, bei einer Betätigung durch den Benutzer durchbiegt. Die auftretenden Bedienkräfte können beispielsweise durch drücken, schieben, ziehen oder drehen des Bedienelements und/oder des weiteren Bedienelements entstehen. Das Abstützelement ist mit dem Gehäuse wirkverbunden, sodass das Abstützelement die auftretenden Bedienkräfte an das Gehäuse ableiten kann.

Es ist denkbar, dass das Abstützelement mit dem Steuereinheitengehäuse wirkverbunden ist, sodass das Abstützelement die auftretenden Bedienkräfte an das Steuereinheitengehäuse ableitet. Das Steuereinheitengehäuse kann mit dem Gehäuse wirkverbunden sein, sodass die auftretenden Bedienkräfte von dem Steuereinheitengehäuse an das Gehäuse abgeleitet werden kann. Es ist möglich, dass das Steuereinheitengehäuse an dem Gehäuse anliegt.

Das Abstützelement kann beispielsweise als ein, insbesondere umlaufender, Absatz, eine, insbesondere umlaufende, Kante, ein, insbesondere umlaufender, Kragen, ein Steg, ein, insbesondere umlaufender, Vorsprung, ein Stift, ein Stab, ein Podest oder dergleichen ausgeformt sein. Es kann auch eine Mehrzahl an Abstützelementen vorgesehen sein, wie beispielsweise zwei, drei, vier oder fünf.

In einer Ausführungsform sind das Positionierelement und das Abstützelement einstückig ausgebildet. Hierdurch kann eine stabile Positioniervorrichtung zur Verfügung gestellt werden.

In einer Ausführungsform der Handwerkzeugmaschine weist die Positioniervorrichtung ein weiteres Positionierelement zur Zentrierung der Benutzerschnittstelle, insbesondere das Trägerelement und/oder die Benutzerschnittstellenplatine, relativ zu einer Gehäuseöffnung auf und die Benutzerschnittstelle, insbesondere das Trägerelement und/oder die Benutzerschnittstellenplatine, weist ein Verbindungselement auf, wobei das Verbindungselement dazu ausgebildet ist, das weitere Positionierelement aufzunehmen. Das Gehäuse weist die Gehäuseöffnung auf. Die Gehäuseöffnung kann bei dem Standfuß des Gehäuses angeordnet sein. Die Gehäuseöffnung kann beispielsweise eine runde, ovale oder mehreckige Form aufweisen. Das weitere Positionierelement ist dazu ausgebildet, die Benutzerschnittstelle, insbesondere das Trägerelement und/oder die Benutzerschnittstellenplatine, relativ zu der Gehäuseöffnung zu zentrieren. Das weitere Positionierelement kann die Benutzerschnittstelle, insbesondere das Trägerelement und/oder die Benutzerschnittstellenplatine, relativ zur Gehäuseöffnung und zusätzlich relativ zu der Steuereinheit, insbesondere dem Steuereinheitengehäuse, positionieren. Dies ermöglicht, dass die Benutzerschnittstelle, insbesondere das Trägerelement und/oder die Benutzerschnittstellenplatine, relativ zur Gehäuseöffnung und zusätzlich zur Steuereinheit, insbesondere Steuereinheitenplatine, zentriert ist. Das weitere Positionierelement kann beispielsweise als eine zumindest teilweise umlaufende Kante, ein zumindest teilweise umlaufender Steg, ein O-Ring, ein Stift, ein Stab oder dergleichen ausgeformt sein. Das Verbindungselement ist dazu ausgebildet, das weitere Positionierelement aufzunehmen. Dabei kann das weitere Positionierelement an dem Verbindungselement anliegen. Weiter kann das Verbindungselement eine form- und/oder kraftschlüssige Verbindung mit dem weiteren Positionierelement ausbilden. Das Verbindungselement kann beispielsweise als eine Aufnahme, eine Ausnehmung, eine Öffnung, eine zumindest teilweise umlaufende Nut, eine zumindest teilweise umlaufende Fläche, ein zumindest teilweise umlaufender Rahmen oder dergleichen ausgeformt sein.

Alternativ oder zusätzlich kann das Gehäuse das weitere Positionierelement ausbilden. Dabei kann dann das weitere Positionierelement beispielsweise als ein zumindest teilweise umlaufender Vorsprung, ein zumindest teilweise umlaufender Steg oder dergleichen ausgeformt sein. Das Verbindungselement der Benutzerschnittstelle, insbesondere des Trägerelements und/oder der Benutzerschnittstellenplatine, kann dann als ein zumindest teilweise umlaufender Rahmen oder als eine zumindest teilweise umlaufende Fläche ausgebildet sein.

In einer Ausführungsform der Handwerkzeugmaschine weist die Positioniervorrichtung zumindest ein Begrenzungselement auf und die Steuereinheit umfasst eine Steuereinheitenplatine, wobei die Steuereinheitenplatine an dem Begrenzungselement anliegt und das Begrenzungselement dazu ausgebildet ist, die Steuereinheitenplatine relativ zu der Benutzerschnittstelle, insbesondere dem Trägerelement und/oder der Benutzerschnittstellenplatine, anzuordnen. Das Begrenzungselement kann beispielsweise als eine Schräge, eine Rippe, eine Anlage, eine Fläche, ein Steg, ein Stift, ein Podest, eine Kante, ein Kragen, ein Absatz oder dergleichen ausgeformt sein. Das Begrenzungselement positiert die Steuereinheitenplatine relativ zu der Benutzerschnittstelle, insbesondere dem Trägerelement und/oder der Benutzerschnittstellenplatine, und/oder zu dem Steuereinheitengehäuse, indem die Steuereinheitenplatine an dem Begrenzungselement anliegt. Es ist denkbar, dass eine Mehrzahl an Begrenzungselementen vorgesehen ist, wie beispielsweise zwei, drei oder vier.

Wie oben beschrieben, kann die Steuereinheit die Schaltsignale, die Benutzerschnittstellensignale und die Ausgabesignale empfangen und verarbeiten. Dazu weist die Steuereinheit die Steuereinheitenplatine auf. Die Steuereineinheitenplatine kann zumindest einen Mikroprozessor oder einen Mikrocontrollerumfassen. Hier umfasst die Steuereinheit das Steuereinheitengehäuse und die Steuereinheitenplatine. Das Steuereinheitengehäuse nimmt dabei die Steuereinheitenplatine auf.

In einer Ausführungsform sind das Abstützelement und das Begrenzungselement einstückig. Denkbar ist auch, dass das Abstützelement, das Begrenzungselement und das Positionierelement einstückig ausgebildet sind. Hierdurch kann eine stabile und gleichzeitig kompakte Positioniervorrichtung bereitgestellt werden.

In einer Ausführungsform der Handwerkzeugmaschine ist die Benutzerschnittstelle, insbesondere die Benutzerschnittstellenplatine, elektrisch leitend mit der Steuereinheit, insbesondere der Steuereinheitenplatine, verbunden. Die Benutzerschnittstelle kann mittels einer Steckverbindung, einer Kabelverbindung oder einer Lötverbindung elektrisch leitend mit der Steuereinheit verbunden sein. Bei der Steckverbindung weist beispielsweise die Benutzerschnittstelle zumindest einen Stecker auf und die Steuereinheit umfasst zumindest eine zum Stecker korrespondierende Kupplung. Bei einer Verbindung des Steckers mit der Kupplung kann die Benutzerschnittstelle elektrisch leitend mit der Steuereinheit verbunden werden. Denkbar ist auch, dass die Benutzerschnittstelle zumindest eine Kupplung aufweist und die Steuereinheit zumindest einen Stecker zur elektrischne Leitung zumfasst. Bei der Kabelverbindung kann die Benutzerschnittstelle und die Steuereinheit mittels zumindest eines Kabels elektrisch leitend verbunden werden. Hierbei kann das Kabel beispielsweise mit der Benutzerschnittstelle und der Steuereinheit verlötet werden. Bei der Lötverbindung können die Benutzerschnittstelle und die Steuereinheit über verlöteten Pins elektrisch miteinander verbunden werden.

Die Benutzerschnittstelle, insbesondere die Benutzerschnittstellenplatine, weist zumindest eine Öffnung für die Steuereinheit, insbesondere die Steuereinheitenplatine, auf. Die Steuereinheit, insbesondere die Steuereinheitenplatine, weist zumindest einen Pin für die Benutzerschnittstelle auf. Der Pin für die Benutzerschnittstelle ist dazu vorgesehen, in die Öffnung für die Steuereinheit einzugreifen und eine elektrische Verbindung auszubilden. Der Pin für die Benutzerschnittstelle kann unter Verwendung der Öffnung für die Steuereinheit mit der Benutzerschnittstelle, insbesondere die Benutzerschnittstelleplatine, verlötet werden. Es ist denkbar, dass der Pin für die Benutzerschnittstelle, insbesondere die Benutzerschnittstellenplatine, eine form- und/oder kraftschlüssige Verbindung mit der Öffnung für die Steuereinheit, insbesondere die Steuereinheitenplatine, ausbildet, um die Benutzerschnittstelle elektrisch leitend mit der Steuereinheit zu verbinden.

Es ist denkbar, dass die Benutzerschnittstelle, insbesondere die Benutzerschnittstellenplatine, eine Mehrzahl an Öffnungen für die Steuereinheit aufweist, wie beispielsweise zwei, drei, vier oder mehr als vier. Weiter ist es denkbar, dass die Steuereinheit, insbesondere die Steuereinheitenplatine, eine Mehrzahl an Pins für die Benutzerschnittstelle aufweist, wie beispielsweise zwei, drei, vier oder mehr als vier. Hierbei stimmt die Mehrzahl an Öffnungnen für die Steuereinheit mit der Mehrzahl an Pins für die Benutzerschnittstelle überein.

Es ist möglich, dass die Benutzerschnittstellenplatine alternativ oder zusätzlich über eine Vergussmasse mit der Steuereinheitenplatine verbunden ist. Dabei kann das Steuereinheitengehäuse die Vergussmasse aufnehmen. Die Vergussmasse ermöglicht eine stoffschlüssige Verbindung zwischen der Steuereinheitenplatine und der Benutzerschnittstelleplatine.

In einer Ausführungsform der Handwerkzeugmaschine bildet das Steuereinheitengehäuse die Positioniervorrichtung aus. Hierbei kann dann das Steuereinheitengehäuse das Positionierelement, das Abstützelement und das Begrenzungselement ausbilden. Denkbar ist auch, dass das Steuereinheitengehäuse einstückig mit dem Positionierelement, dem Abstützelement und dem Begrenzungselement ist. Indem das Steuereinheitengehäuse die Positioniervorrichtung ausbildet, kann das Steuereinheitengehäuse die Benutzerschnittstelle, insbesondere das Trägerelement und/oder die Benutzerschnittstellenplatine, relativ zu der Steuereinheit, insbesondere der Steuereinheitenplatine, anordnen und positioniert halten. Hierdurch wird erreicht, dass die Benutzerschnittstelle, insbesondere das Trägerelement und die Benutzerschnitttstellenplatine, gemeinsam mit der Steuereinheit, insbesondere dem Steuereinheitengehäuse und der Steuereinheitenplatine, als ein gemeinsames Modul bei einer Montage der Handwerkzeugmaschine montiert werden kann. Dabei wird eine Montagezeit der Handwerkzeugmaschine verkürzt und die Montage vereinfacht, wobei gleichzeit eine geringe Fußhöhe erzielt wird. Die geringe Fußhöhe hat den Vorteil, dass die Handwerkzeugmaschine auch in engen Arbeitsstellen einsetzbar ist. Zudem wird eine geringe Toleranzkette zwischen der Benutzerschnittstellenplatine und dem Trägerelement erreicht, indem das Steuereinheitengehäuse die Positioniervorrichtung ausbildet.

In einer Ausführungsform überragt das Gehäuse die Benutzerschnittstelle zumindest teilweise. Hierzu weist das Gehäuse zumindest einen Vorsprung, einen Steg, eine Kante oder dergleichen auf. Das Gehäuse ordnet dabei die Benutzerschnittstelle, insbesondere das Trägerelement und/oder die Benutzerschnittstellenplatine, zwischen dem Gehäuse und der Steuereinheit, insbesondere dem Steuerreinheitengehäuse und/oder der Steuereinheitenplatine, an. Hierzu kann das Gehäuse zumindest eine Quetschrippe aufweisen. Die Quetschrippe ist dazu vorgesehen, die Benutzerschnittstelle, insbesondere das Trägerelement und/oder die Benutzerschnittstellenplatine, in Richtung zur Steuereinheit mit einer Kraft zu beaufschlagen, sodass die Benutzerschnittstelle im Wesentlichen spielfrei innerhalb des Gehäuses angeordnet werden kann. Das Gehäuse kann somit zusätzlich die Benutzerschnittstelle, insbesondere das Trägerelement und/oder die Benutzerschnittstellenplatine, relativ zu der Steuereinheit, insbesondere dem Steuereinheitengehäuse und/oder der Steuereinheitenplatine, anordnen und positionieren. Es ist denkbar, dass die Benutzerschnittstelle, insbesondere das Trägerelement, eine Bedienfolie aufweist. Die Bedienfolie kann Bediensymbole umfassen, wobei die Bediensymbole dazu vorgesehen sind, Informationen über die Handwerkzeugmaschine dem Benutzer anzuzeigen. Die Informationen über die Handwerkzeugmaschine können beispielsweise die Betriebsmodi der Handwerkzeugmaschine, die Drehzahlstufen oder dergleichen sein. Das Gehäuse kann die Benutzerschnittstelle derart überragen, dass das Gehäuse auf der Bedienfolie zumindest teilweise anliegt. Es ist denkbar, dass die Bedienfolie zumindest teilweise vertieft in dem Trägerelement eingelassen ist.

In einer alternativen Ausfürungsform kann das Gehäuse die Benutzerschnittstelle über die Bedienfolie auf die Steuereinheit, insbesondere das Steuereinheitengehäuse, klemmen. Zusätzlich kann die Bedienfolie hierbei eine Reibung zwischen dem Gehäuse und der Benutzerschnittstelle, insbesondere dem Trägerelement, reduzieren.

In einer alternativen Ausführungsform bildet die Benutzerschnittstelle, insbesondere das Trägerelement, das Positionierelement aus und das Positionierelement greift in eine Aufnahme des Steuereinheitengehäuses ein. Die Benutzerschnittstelle, insbesondere das Trägerelement, kann das Positionierelement beispielsweise stiftartig, kantenartig, stegartig, vorsprungartig oder dergleichen ausbilden. Es ist denkbar, dass das Positionierelement einstückig mit der Benutzerschnittstelle, insbesondere dem Trägerelement, ist. Die Aufnahme des Steuereinheitengehäuses kann beispielhaft schalenartig, topfartig, nutartig, nach Art einer Öffnung, nach Art einer Ausnahme oder dergleichen ausgebildet sein. Das Positionierelement kann mit der Aufnahme des Steuereinheitengehäuses eine form- und/oder kraftschlüssige Verbindung ausbilden, um die Benutzerschnittstelle, insbesondere das Trägerelement und/oder die Benutzerschnittstellenplatine, relativ zu der Steuereinheit, insbesondere der Steuereinheitenplatine, zu positionieren.

In einer alternativen Ausführungsform bildet das Gehäuse das Positionierelement aus und das Positionierelement greift durch die Steuereinheit, insbesondere das Steuereinheitengehäuse und/oder die Steuereinheitenplatine, in die Benutzerschnittstelle, insbesondere die Benutzerschnittstellenplatine und/oder das Trägerelement, ein. Das Gehäuse kann das Positionierelement beispielsweise stiftartig, kantenartig, stegartig, vorsprungartig oder dergleichen ausbilden. Es ist denkbar, dass das Positionierelement einstückig mit dem Gehäuse ist. Die Steuereinheit, insbesondere das Steuereinheitengehäuse und/oder die Steuereinheintenplatine, weist zumindest eine Durchgangsöffnung für das Positionierelement auf. Das Positionierelement kann mit der Durchgangsöffnung der Steuereinheit eine form- und/oder kraftschlüssige Verbindung ausbilden. Das Positionierelement kann durch die Durchgangsöffnung der Steuereinheit, insbesondere des Steuereinheitengehäuses, durchgreifen. Die Benutzerschnittstelle weist hier eine Durchgangsöffnung und eine Aufnahme für das Positionierelement auf. Die Benutzerschnittstellenplatine weist hierbei die Durchgangsöffnung auf. Das Positionierelement ist dazu ausgebildet, durch die Durchgangsöffnung der Benutzerschnittstellenplatine durchzugreifen. Dabei kann das Positionierelmeent eine form- und/oder kraftschlüssige Verbindung mit der Durchgangsöffnung der Benutzerschnittstellenplatine ausbilden. Hier weist das Trägerelement die Aufnahme für das Positionierelement auf. Das Positionierelement greift in die Aufnahme des Trägerelements ein. Das Positionierelement kann eine kraft- und/oder formschlüssige Vebindung mit der Aufnahme des Trägerelements ausbilden. Die Aufnahme des Trägerelements kann beispielhaft schalenartig, topfartig, nutartig, nach Art einer Öffnung, nach Art einer Ausnahme oder dergleichen ausgebildet sein.

### Kurze Beschreibung der Zeichnungen

Die Erfindung wird nachfolgend anhand von bevorzugten Ausführungsformen erläutert. Die Zeichnungen im Folgenden zeigen:
Fig. 1 eine schematische Ansicht einer erfindungsgemäßen Handwerkzeugmaschine mit einer Benutzerschnittstelle;
Fig. 2 ein perspektivischer Ausschnitt der Handwerkzeugmaschine mit der Benutzerschnittstelle;
Fig. 3 eine Querschnittansicht der Benutzerschnittstelle mit einer erfindungsgemäßen Positioniervorrichtung;
Fig. 4 eine Längsschnittansicht der Benutzerschnittstelle mit der erfindungsgemäßen Positioniervorrichtung;
Fig. 5a eine perspektivische Ansicht eines Trägerelements;
Fig. 5b eine perspektivische Ansicht eines Steuereinheitengehäuses;
Fig. 5c eine perspektivische Ansicht einer Steuereinheitenplatine mit einer Benutzerschnittstellenplatine;
Fig. 6a eine perspektivische Schnittansicht der Handwerkzeugmaschine mit einer alternativen Ausführungsform der Positioniervorrichtung;
Fig. 6b eine perspektivische Ansicht der alternativen Ausführungsform der Positioniervorrichtung;

### Beschreibung der Ausführungsbeispiele

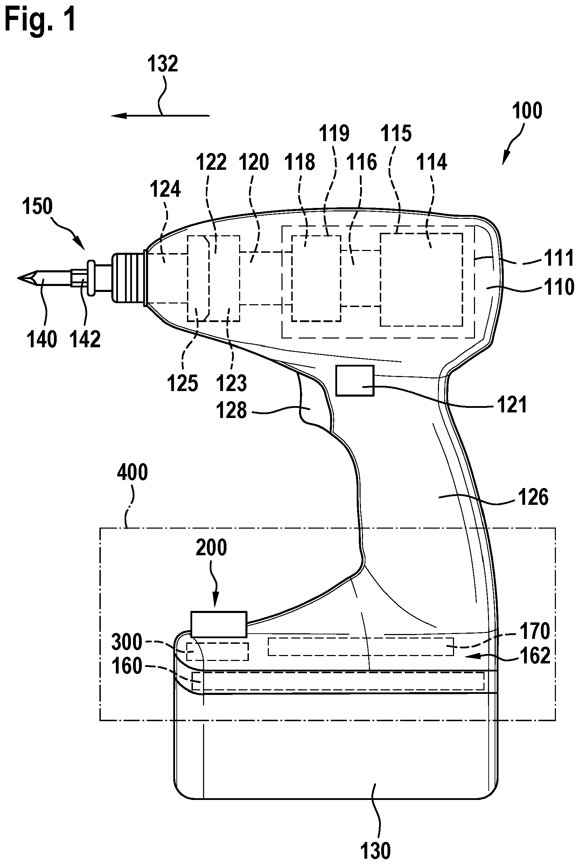

Fig. 1 zeigt eine erfindungsgemäße Handwerkzeugmaschine 100, wobei sie hier als ein beispielhafter Akku-Drehschlagschrauber ausgebildet ist. Die Handwerkzeugmaschine 100 umfasst eine Abtriebswelle 124, eine Werkzeugaufnahme 150 und ein beispielhaftes Schlagwerk 122, z.B. ein Dreh- bzw. Rotationsschlagwerk. Die Handwerkzeugmaschine 100 weist ein Gehäuse 110 mit einem Handgriff 126 auf. Die Handwerkzeugmaschine 100 ist zu einer netzunabhängigen Stromversorgung mechanisch und elektrisch mit einer Energieversorgung für einen Akkubetrieb verbindbar, sodass die Handwerkzeugmaschine 100 als akkubetriebene Handwerkzeugmaschine 100 ausgebildet ist. Als Energieversorgung dient hier ein Handwerkzeugmaschinenakkupack 130. Die vorliegende Erfindung ist jedoch nicht auf akkubetriebene Handwerkzeugmaschinen beschränkt, sondern kann auch bei netzabhängigen, also netzbetriebenen, Handwerkzeugmaschinen oder pneumatisch betriebenen Handwerkzeugmaschinen angewendet werden.

Das Gehäuse 110 umfasst dabei illustrativ eine Antriebseinheit 111 und das Schlagwerk 122. Die Antriebseinheit 111 umfasst ferner einen elektrischen Antriebsmotor 114, welcher von dem Handwerkzeugmaschinenakkupack 130 mit Strom versorgt wird, und ein Getriebe 118. Das Getriebe 118 kann als zumindest ein Planetengetriebe ausgebildet sein. Der Antriebsmotor 114 ist derart ausgelegt, dass er beispielsweise über einen Handschalter 128 betätigbar ist, sodass der Antriebsmotor 114 ein- und ausschaltbar ist. Der Antriebsmotor 114 kann ein beliebiger Motortyp, wie beispielsweise ein elektronisch kommutierter Motor, ein Bürstenmotor, ein Gleichstrommotor oder ein Wechselstrommotor, sein. Vorteilhaft ist der Antriebsmotor 114 elektronisch steuer- und/oder regelbar, sodass ein Reversierbetrieb, sowie eine gewünschte Drehgeschwindigkeit, realisierbar sind. Für den Reversierbetrieb weist die Handwerkzeugmaschine 100 ein Drehrichtungsumschaltelement 121 auf, das als ein Drehrichtungsumschalter ausgebildet ist. Das Drehrichtungsumschaltelement 121 ist dazu ausgebildet, den Antriebsmotor 114 zwischen einer Rechtslaufdrehrichtung und einer Linkslaufdrehrichtung umzuschalten. Der Aufbau und die Funktionsweise eines geeigneten Antriebsmotors sind dem Fachmann hinlänglich bekannt, weshalb hier nicht näher darauf eingegangen wird.

Das Getriebe 118 ist mit dem Antriebsmotor 114 über eine Motorwelle 116 verbunden. Das Getriebe 118 ist dazu vorgesehen, eine Drehung der Motorwelle 116 in eine Drehung zwischen dem Getriebe 118 und dem Schlagwerk 122 über ein Antriebsglied 120, beispielsweise einer Antriebswelle, umzuwandeln. Bevorzugt erfolgt diese Umwandlung derart, dass sich das Antriebsglied 120 relativ zur Motorwelle 116 mit vergrößertem Drehmoment, aber mit einer verringerten Drehgeschwindigkeit, dreht. Illustrativ ist dem Antriebsmotor 114 ein Motorgehäuse 115 zugeordnet, wie dem Getriebe 118 ein Getriebegehäuse 119. Das Motorgehäuse 115 wie auch das Getriebegehäuse 119 sind beispielshaft in dem Gehäuse 110 angeordnet. Es ist jedoch auch denkbar, dass der Antriebsmotor 114 und das Getriebe 118 unmittelbar im Gehäuse 110 angeordnet sein können, wenn die Handwerkzeugmaschine 100 in einer "open frame"-Bauweise ausgebildet ist.

Das Schlagwerk 122 ist mit dem Antriebsglied 120 verbunden und umfasst beispielhaft einen Schlagkörper 125, das schlagartige Drehimpulse mit hoher Intensität erzeugt. Über den Schlagkörper 125 werden diese schlagartigen Drehimpulse auf die Abtriebswelle 124, beispielsweise eine Arbeitsspindel, übertragen. Das Schlagwerk 122 umfasst ein Schlagwerkgehäuse 123, wobei das Schlagwerk 122 auch in einem anderen geeigneten Gehäuse, wie beispielsweise dem Getriebegehäuse 119, angeordnet sein kann. Das beispielhafte Schlagwerk 122 ist zum Antrieb der Abtriebswelle 124 ausgebildet. An der Abtriebswelle 124 ist eine Werkzeugaufnahme 150 vorgesehen. Bevorzugt ist die Werkzeugaufnahme 150 an der Abtriebswelle 124 angeformt und/oder ausgebildet. Vorzugsweise ist die Werkzeugaufnahme 150 in einer von der Antriebseinheit 111 wegweisenden, axialen Richtung 132 angeordnet. Die Werkzeugaufnahme 150 ist hier als eine Innensechskantaufnahme, nach Art eines Bithalters, ausgebildet, welche dazu vorgesehen ist, ein Einsatzwerkzeug 140 aufzunehmen. Das Einsatzwerkzeug ist nach Art eines Schrauberbits mit einer Mehrkant-Außenkupplung 142 ausgeformt. Die Art des Schrauberbits, beispielsweise nach HEX-Typ, ist dem Fachmann hinlänglich bekannt. Die vorliegende Erfindung ist jedoch nicht auf eine Verwendung von HEX-Schrauberbits beschränkt, sondern auch weitere, dem Fachmann als sinnvoll erscheinende, Werkzeugaufnahmen können Anwendung finden, wie beispielsweise HEX-Bohrer, SDS-Quick-Einsatzwerkzeuge oder Rundschaftbohrfutter. Zudem sind dem Fachmann der Aufbau und die Funktionsweise eines geeigneten Bithalters hinlänglich bekannt.

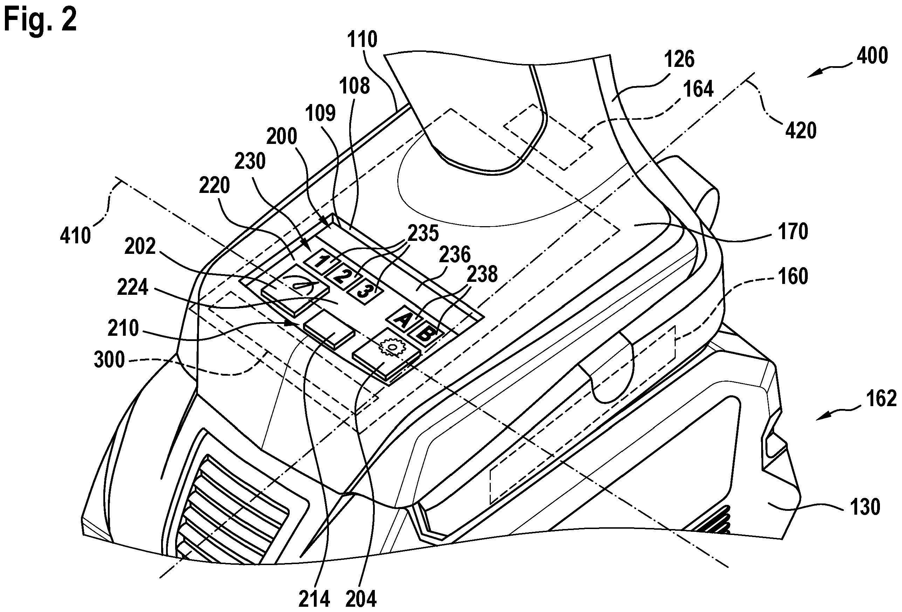

Die Handwerkzeugmaschine 100 weist das Gehäuse 110, eine Steuereinheit 170 zumindest zur Steuerung der Antriebseinheit 111, eine Benutzerschnittstelle 200 und eine erfindungsgemäße Positioniervorrichtung 300 auf. Das Gehäuse 110 nimmt zumindest die Steuereinheit 170 und die Benutzerschnittstelle 200 zumindest teilweise auf. Die Benutzerschnittstelle 200 umfasst ein Bedienelement 202 und ein weiteres Bedienelement 204 und eine Arbeitsstellenbeleuchtungseinheit 210, siehe auch Fig. 2 bis 5. Das Bedienelement 202 und das weitere Bedienelement 204 können Eingaben durch einen Benutzer empfangen. Die Steuereinheit 170 weist eine Steuereinheitenplatine 172 und ein Steuereinheitengehäuse 174 auf, siehe auch Fig. 2 bis 6. Das Steuereinheitengehäuse 174 nimmt die Steuereinheitenplatine 172 auf. Die Steuereinheitenplatine 172 weist zumindest einen Mikrocontroller auf.

Die Steuereinheit 170 empfängt Schaltsignale, die unter Verwendung des Handschalters 128 erzeugt werden. Zudem verarbeitet die Steuereinheit 170 die Schaltsignale des Handschalters 128, bevor die Steuereinheit 170 die Schaltsignale an die Antriebseinheit 111 weiterleitet. Zusätzlich empfängt die Steuereinheit 170 Benutzerschnittstellensignale von der Benutzerschnittstelle 200. Die Benutzerschnittstellensignale werden durch die Eingaben des Benutzers über das Bedienelement 202 und/oder das weitere Bedienelement 204 erzeugt. Die Steuereinheit 170 verarbeitet die Benutzerschnittstellensignale in zumindest ein Ausgabesignal und gibt dieses aus. Das Ausgabesignal wird an die Benutzerschnittstelle 200 und/oder die Antriebseinheit 111 gesendet.

Zudem umfasst das Gehäuse 110 eine Energieversorgungshaltevorrichtung 160. Ferner ist die Benutzerschnittstelle 200 an der Energieversorgungshaltevorrichtung 160 angeordnet, siehe auch Fig. 2. Die Energieversorgungshaltevorrichtung 160 nimmt den Handwerkzeugmaschinenakkupack 130 auf und bildet dabei einen Standfuß 162 mit einer Standfläche aus. Der Handwerkzeugmaschinenakkupack 130 ist werkzeuglos von der Energieversorgungshaltevorrichtung 160 lösbar. Weiter weist das Gehäuse 110 den Handgriff 126 und die Energieversorgungshaltevorrichtung 160 auf. Der Handgriff 126 kann von dem Benutzer ergriffen werden. In einer Ausführungsform ist die Energieversorgungshaltevorrichtung 160 an dem Handgriff 126 angeordnet. Mittels des Standfußes 162 kann die Handwerkzeugmaschine 100 abgestellt werden. Die Benutzerschnittstelle 200 ist in dieser Ausführungsform an der Energieversorgungshalteeinheit 160 angeordnet.

Fig. 2 stellt einen perspektivischen Ausschnitt 400 der Handwerkzeugmaschine 100 mit der Benutzerschnittstelle 200 dar. Das Gehäuse 110 nimmt die Steuereinheit 170 und die Benutzerschnittstelle 200 zumindest teilweise auf. Dabei umfasst das Gehäuse 110 zumindest eine nicht näher dargestellte Aufnahme 164 für die Steuereinheit 170. Die Aufnahme 164 für die Steuereinheit 170 umgreift das Steuereinheitengehäuse 174 zumindest teilweise. Die Aufnahme 164 für die Steuereinheit 170 ist beispielhaft als Rippen und einstückig mit dem Gehäuse 110 ausgebildet. Das Bedienelement 202 ist hier dazu vorgesehen, eine Drehzahlstufe der Antriebseinheit 111 und das weitere Bedienelement 204 einen Betriebsmodus einzustellen. Die Benutzerschnittstelle 200 umfasst zudem ein Anzeigeelement 230, das eine Auswahl der Drehzahlstufe der Antriebseinheit 111 und den eingestellten Betriebsmodus anzeigen kann.

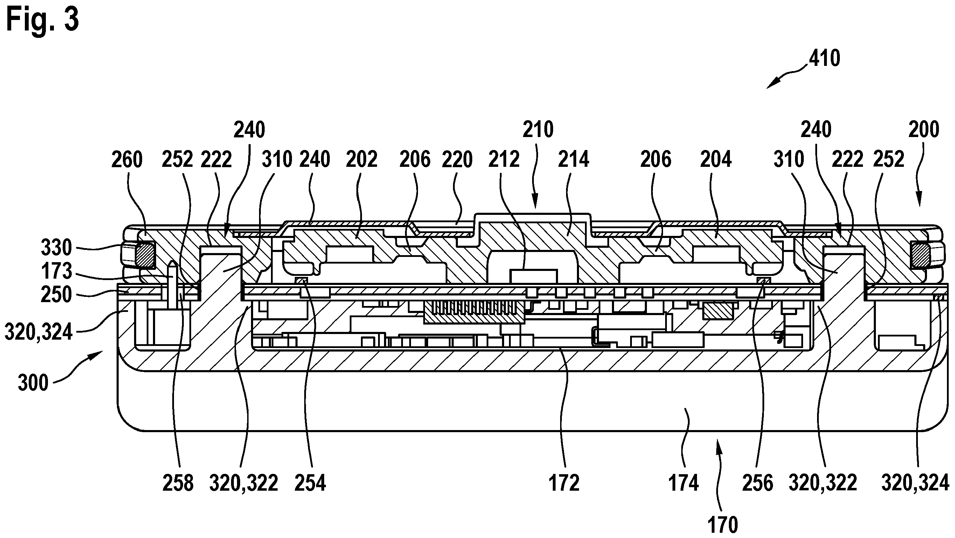

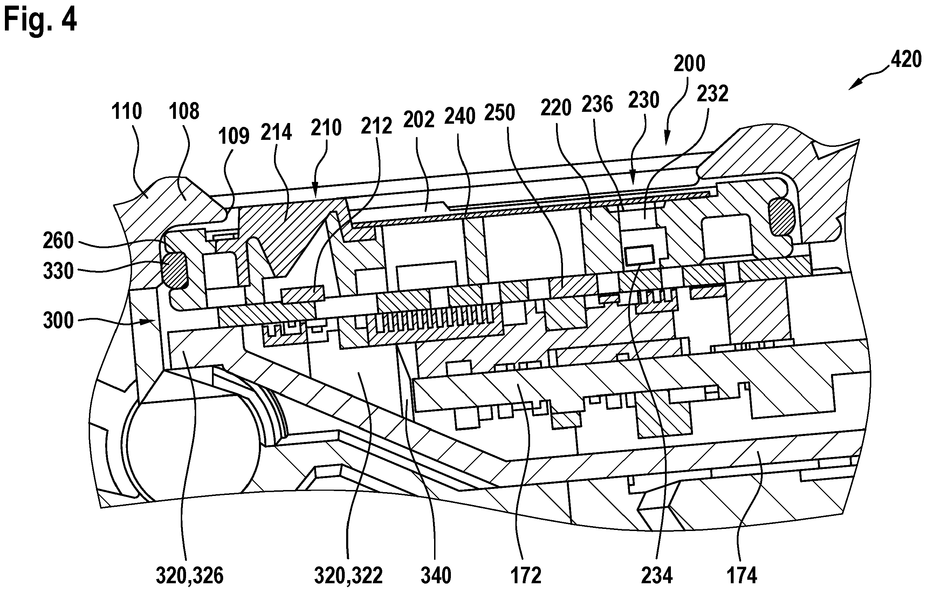

Fig. 3 zeigt eine Querschnittansicht 410 der Benutzerschnittstelle 200 mit einer erfindungsgemäßen Positioniervorrichtung 300 und der Steuereinheit 170. Die Positioniervorrichtung 300 stützt die Benutzerschnittstelle 200 an dem Steuereinheitengehäuse 174 ab. Die Benutzerschnittstelle 200 liegt dabei an der Positioniervorrichtung 300 an. Zusätzlich ordnet die Positioniervorrichtung 300 die Benutzerschnittstelle 200 relativ zu dem Steuereinheitengehäuse 174 an und positioniert die Benutzerschnittstelle 200 in einer Relativposition. Das Steuereinheitengehäuse 174 ist dazu vorgesehen, die Steuereinheit 170 im Gehäuse 110 anzuordnen, wobei das Steuereinheitengehäuse 174 beispielhaft nach Art eines Bechers ausgeformt ist, siehe auch Fig. 4 bis 6.

Die Positioniervorrichtung 300 umfasst zumindest ein Positionierelement 310. Hier sind beispielhaft zwei Positionierelemente 310 ausgebildet, die stiftartig ausgeformt sind. Das Positionierelement 310 ist dazu vorgesehen, die Benutzerschnittstelle 200 zumindest abschnittsweise überlappend zur Steuereinheit 170 anzuordnen. Hier überlappt die Benutzerschnittstelle 200 zumindest abschnittsweise das Steuereinheitengehäuse 174. Das Positionierelement 310 ordnet die Benutzerschnittstelle 200 im Wesentlichen parallel zur Steuereinheit 170 an. Das Positionierelement 310 greift zumindest teilweise in die Benutzerschnittstelle 200 ein. Hier umfasst die Benutzerschnittstelle 200 zumindest eine Aufnahme 240, wobei hier beispielhaft zwei Aufnahmen 240 ausgebildet sind. Das Positionierelement 310 greift in die Aufnahme 240 zumindest teilweise ein. Dabei bildet das Positionierelement 310 eine formschlüssige Verbindung mit der Aufnahme 240 der Benutzerschnittstelle 200 aus.

Die Benutzerschnittstelle 200 umfasst eine Benutzerschnittstellenplatine 250, siehe auch Fig. 4 - 6. Die Benutzerschnittstellenplatine 250 weist zumindest eine Durchgangsöffnung 252 auf, wobei beispielhaft zwei Durchgangsöffnungen 252 ausgeformt sind. Das Positionierelement 310 greift durch die Durchgangsöffnung 252 durch. Die Durchgangsöffnung 252 ist hier beispielsweise mittels einer Durchgangsbohrung ausgebildet. Die Durchgangsöffnung 252 ist hier kreisförmig ausgeformt. Das Positionierelement 310 bildet hier mit der Durchgangsöffnung 252 eine formschlüssige Verbindung aus.

Die Benutzerschnittstellenplatine 250 umfasst ein Schaltelement 254 und ein weiteres Schaltelement 256. Das Schaltelement 254 und das weitere Schalteelement 256 sind hier beispielhaft jeweils als ein Taster ausgebildet. Das Schaltelement 254 ist dazu ausgebildet, von dem Bedienelement 202 betätigt zu werden. Das weitere Schaltelement 256 ist dazu ausgebildet, von dem weiteren Bedienelement 204 betätigt zu werden. Die Arbeitsstellenbeleuchtungseinheit 210 weist zumindest ein Lichtelement 212 auf, das hier beispielhaft als eine LED ausgebildet ist. Das Lichtelement 212 ist hier auf der Benutzerschnittstellenplatine 250 angeordnet. Weiter weist die Arbeitsstellenbeleuchtungseinheit 210 ein Lichtleitelement 214 auf, das hier beispielhaft als eine Fokussierlinse ausgeformt ist.

Die Benutzerschnittstelle 200 umfasst ein Trägerelement 220. Somit umfasst die Benutzerschnittstelle 200 hier das Trägerelement 220 und die Benutzerschnittstellenplatine 250. Das Trägerelement 220 weist zumindest ein Aufnahmeelement 222 auf, wobei hier beispielhaft zwei Aufnahmeelemente 222 ausgeformt sind. Das Positionierelement 310 greift in das Aufnahmeelement 222 des Trägerelements 220 ein. Dabei bildet das Positionierelement 310 eine formschlüssige Verbindung mit dem Aufnahmeelement 222 des Trägerelements 220 aus. Das Aufnahmeelement 222 ist hier beispielhaft als eine topfartige Ausnahme ausgeformt. Das Aufnahmeelement 222 ist hier einstückig mit dem Trägerelement 220. Hier umfasst das Trägerelement 220 das Anzeigeelement 230, das Lichtleitelement 214 der Arbeitsstellenbeleuchtungseinheit 210, das Bedienelement 202 und das weitere Bedienelement 204. Das Lichtleitelement 214 und das Anzeigeelement 230 sind hier beispielhaft durch das Trägerelement 220 umspritzt. Hier sind das Bedienelement 202 und das weitere Bedienelement 204 einstückig mit dem Trägerelement 220. Das Bedienelement 202 und das weitere Bedienelement 204 umfassen jeweils ein Rückstellelement 206. Das Rückstellelement 206 ermöglicht, dass das Bedienelement 202 und das weitere Bedienelement 204 in zumindest eine Neutralposition geführt wird. In der Neutralposition sind das Bedienelement 202 und das weitere Bedienelement 204 betätigbar. Das Rückstellelement 206 ist als zumindest ein Federelement ausgeformt. Das Rückstellelement 206 bildet jeweils mit dem Bedienelement 202 und dem weiteren Bedienelement 204 einen scharnierartigen Hebel aus.

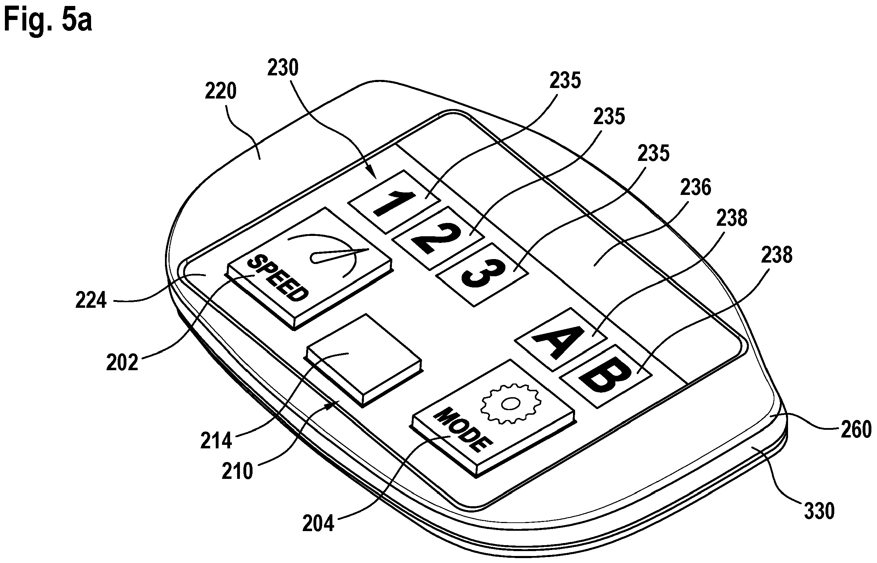

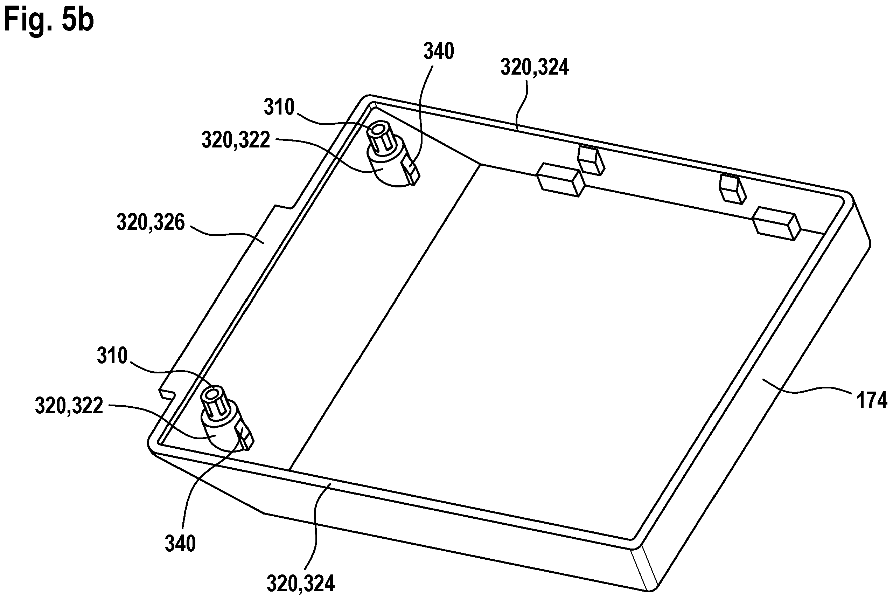

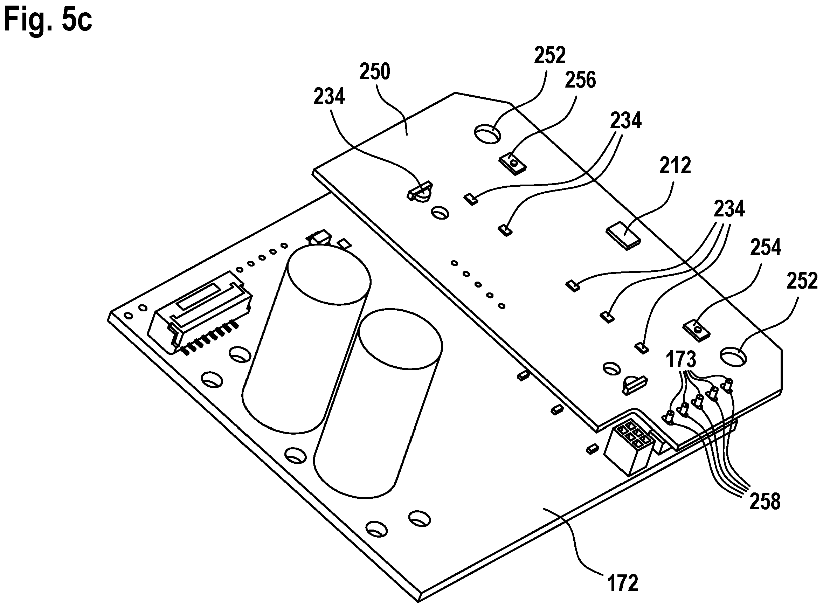

Die Positioniervorrichtung 300 umfasst zumindest ein Abstützelement 320. Hier weist die Positioniervorrichtung beispielhaft fünf Abstützelemente 320 auf, siehe auch Fig. 4 - 6. Dabei liegt die Benutzerschnittstellenplatine 250 an dem Abstützelement 320 an. Das Abstützelement 320 ist dazu vorgesehen, auftretende Bedienkräfte in das Gehäuse 110 abzuleiten. Das Abstützelement 320 ist mit dem Gehäuse 110 wirkverbunden und stützt sich am Gehäuse 110 ab, siehe auch Fig. 4 - 6. Dabei liegt das Abstützelement 320 an dem Steuereinheitengehäuse 174 an. Das Steuereinheitengehäuse 174 ist mit dem Gehäuse 110 wirkverbunden und liegt an dem Gehäuse 110 an, siehe auch Fig. 4 - 6. Die fünf Abstützelement 320 sind hier als zwei umlaufende Absätze 322, als zwei Kanten 324 und als ein Vorsprung 326 ausgeformt, siehe auch Fig. 4 und 5. Hier sind das Positionierelement 310 und das Abstützelement 320, ausgebildet als umlaufender Absatz 322, einstückig ausgeformt.

Das Steuereinheitengehäuse 174 formt die Positioniervorrichtung 300 aus. Dabei formt das Steuereinheitengehäuse 174 das Positionierelement 310 und das Abstützelement 320, ausgebildet als der umlaufende Absatz 322, als die Kante 324 und als den Vorsprung 326, aus. Hier sind das Steuereinheitengehäuse 174 einstückig mit dem Positionierelement 310 und dem Abstützelement 320.

Die Benutzerschnittstellenplatine 250 ist elektrisch leitend mit der Steuereinheitenplatine 172 verbunden, siehe auch Fig. 5c. Die Benutzerschnittstellenplatine 250 umfasst zumindest eine Öffnung 258 für die Steuereinheitenplatine 172. Die Steuereinheitenplatine 172 umfasst zumindest einen Pin 173 für die Benutzerschnittstellenplatine 250. Der Pin 173 für die Benutzerschnittstellenplatine 250 ist dazu ausgebildet, in die Öffnung 285 für die Steuereinheitenplatine 172 einzugreifen. Zudem ist der Pin 173 für die Benutzerschnittstellenplatine 250 mittels der Öffnung 258 für die Steuereinheitenplatine 172 mit der Benutzerschnittstellenplatine 250 verlötet. Hier umfasst die Benutzerschnittstellenplatine 250 eine Mehrzahl an Öffnungen 258 für die Steuereinheitenplatine 172, beispielhaft fünf. Die Steuereinheitenplatine 172 umfasst eine Mehrzahl an Pins 173 für die Benutzerschnittstellenplatine 250, beispielhaft fünf. Die Mehrzahl an Öffnungnen 258 für die Steuereinheitenplatine 172 stimmt mit der Mehrzahl an Pins 173 für die Benutzerschnittstellenplatine 250 überein.

Fig. 4 stellt eine Längsschnittansicht 420 der Benutzerschnittstelle 200 mit der erfindungsgemäßen Positioniervorrichtung 300 dar. Die Positioniervorrichtung 300 umfasst ein weiteres Positionierelement 330 zur Zentrierung der Benutzerschnittstelle 200 relativ zu einer Gehäuseöffnung 109. Die Benutzerschnittstelle 200 umfasst ein Verbindungselement 260. Das Verbindungselement 260 der Benutzerschnittstelle 200 ist dazu vorgesehen, das weitere Positionierelement 330 aufzunehmen. Das Gehäuse 110 umfasst die Gehäuseöffnung 109, wobei die Gehäuseöffnung 109 bei dem Standfuß 162 des Gehäuses 110 ausgebildet ist. Die Gehäuseöffnung 109 ist hier beispielhaft mehreckig ausgeformt, siehe auch Fig. 2. Das weitere Positionierelement 330 ist hier beispielhaft als ein O-Ring ausgebildet. Das Verbindungselement 260 nimmt das weitere Positionierelement 330 auf, sodass das weitere Positionierelement 330 an dem Verbindungselement 260 anliegt. Das Verbindungselement 260 bildet eine formschlüssige Verbindung mit dem weiteren Positionierelement 330 aus. Hier ist das Verbindungselement 260 beispielhaft als umlaufende Nut ausgebildet.

Die Positioniervorrichtung 300 umfasst zumindest ein Begrenzungselement 340, wobei hier zwei Begrenzungselemente 340 ausgebildet sind. Die Steuereinheitenplatine 172 liegt an dem Begrenzungselement 340 an. Das Begrenzungselement 340 ist dazu vorgesehen, die Steuereinheitenplatine 172 relativ zu der Benutzerschnittstelle 200 anzuordnen. Das Begrenzungselement 340 ist hier beispielhaft als eine Rippe ausgebildet.

Hier formt das Steuereinheitengehäuse 174 neben dem Positionierelement 310 und dem Abstützelement 320 auch das Begrenzungselement 340 aus. Zudem sind hier das Steuereinheitengehäuse 174 das Positionierelement 310 , das Abstützelement 320 und das Begrenzungselement 340 einstückig.

Das Gehäuse 110 überragt die Benutzerschnittstelle 200 zumindest teilweise. Das Gehäuse 110 umfasst hier einen umlaufenden Vorsprung 108, siehe auch Fig. 2. Das Gehäuse 110 ist dazu ausgebildet, die Benutzerschnittstelle 200 zwischen dem Gehäuse 110 und der Steuereinheit 170 anzuordnen. Hier umfasst das Trägerelement 200 eine Bedienfolie 224, siehe auch Fig. 2, 3 und 5a. Die Bedienfolie 224 weist Bediensymbole auf. Die Bediensymbole sind dazu ausgebildet, Informationen über die Handwerkzeugmaschine, wie beispielsweise die Drehzahlstufen oder die Betriebsmodi, dem Benutzer anzuzeigen. Der Vorsprung 108 des Gehäuse 110 überragt die Benutzerschnittstelle 200. Das Gehäuse 110 weist eine Mehrzahl an nicht näher dargestellten Quetschrippen auf. Die Benutzerschnittstelle 200 wird durch die Mehrzahl an Quetschrippen in Richtung zur Steuereinheit 170 mit einer Kraft beaufschlagt.

Das Anzeigeelement 230 umfasst ein Lichtleitelement 232 in Form einer Fokussierlinse, zumindest ein Lichtelement 234, hier beispielshaft ausgebildet als eine LED, ein Informationsanzeigeelement 236 in Form eines Lichtstreifens, Drehzahlstufenanzeigeelemente 235 und Betriebsmodusanzeigeelemente 238, siehe auch Fig. 5a und 5c. Hier sind sieben Lichtelemente 234 vorgesehen, wobei drei Lichtelemente 234 den Drehzahlstufenanzeigeelementen 235, zwei Lichtelemente 234 den Betriebsmodusanzeigeelementen und zwei Lichtelemente 234 dem Informationsanzeigeelement 236 zugeordnet sind, siehe auch Fig. 5c.

Fig. 5a zeigt eine perspektivische Ansicht des Trägerelements 220. Fig. 5b stellt eine perspektivische Ansicht des Steuereinheitengehäuses 174 dar. Fig. 5c zeigt eine perspektivische Ansicht der Steuereinheitenplatine 172 mit der Benutzerschnittstellenplatine 250.

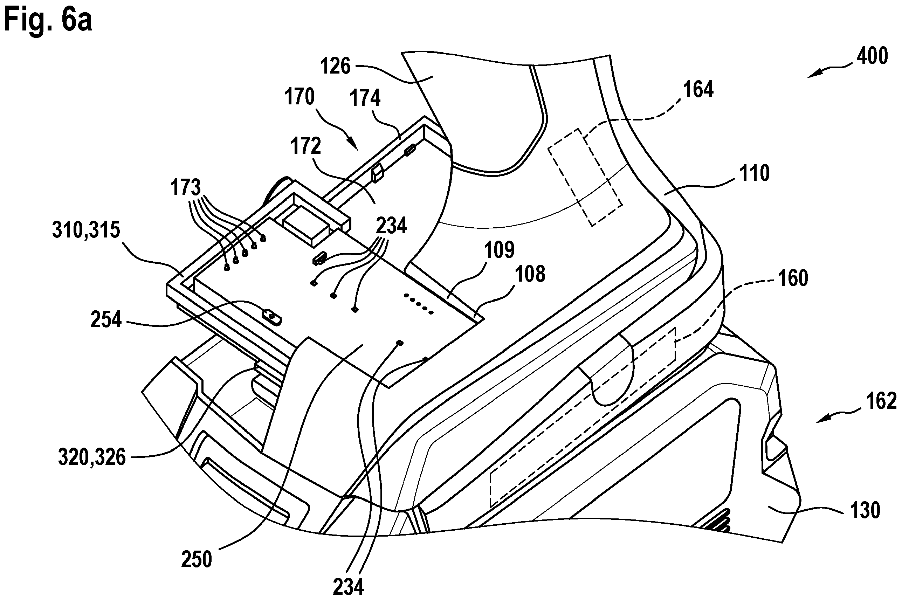

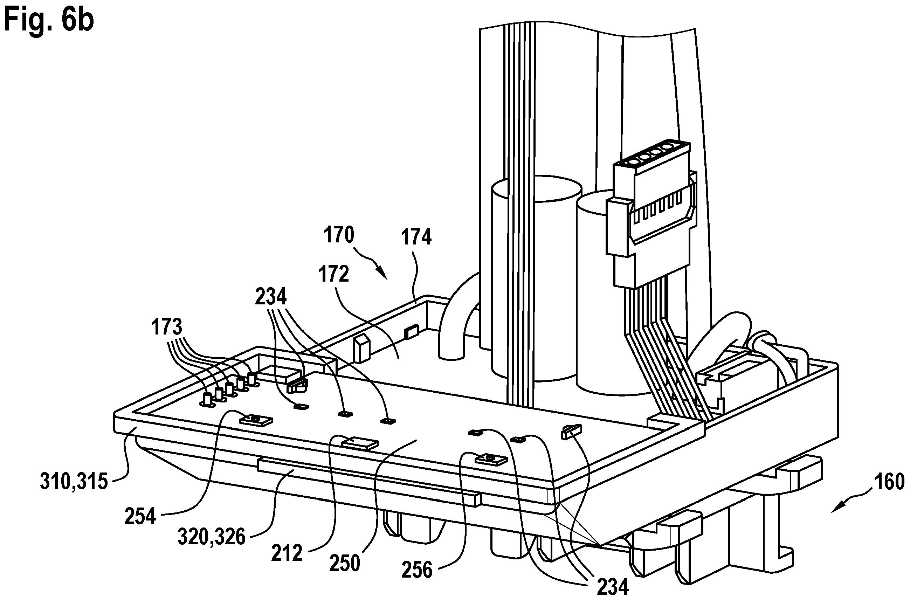

Fig. 6 stellt eine alternative Ausführungsform der Positioniervorrichtung 300 dar. Hierbei zeigt Fig. 6a eine perspektivische Schnittansicht der Handwerkzeugmaschine 100 mit dem Ausschnitt 400 mit der alternativen Ausführungsform der Positioniervorrichtung 300. In der alternativen Ausführungsform umgreift das Positionierelement 310 die Benutzerschnittstelle 200 zumindest teilweise. Hier umgreift das Positionierelement 310 die Benutzerschnittstellenplatine 250 zumindest teilweise. Das Positionierelement 310 bildet eine formschlüssige Verbindung mit der Benutzerschnittstellenplatine 250 aus. Fig. 6b zeigt eine perspektivische Ansicht der alternativen Ausführungsform der Positioniervorrichtung 300. Dabei ist das Positionierelement 310 als ein zumindest teilweise umlaufender Rahmen 315 ausgeformt.

## Patentansprüche

1. Handwerkzeugmaschine (100) mit einer Antriebseinheit (111), wobei die Antriebseinheit (111) mittels zumindest eines Handschalters (128) betätigbar ist, mit einer Steuereinheit (170) zumindest zur Steuerung der Antriebseinheit (111), wobei die Steuereinheit (170) ein Steuereinheitengehäuse (174) aufweist, mit zumindest einer Benutzerschnittstelle (200), wobei die Benutzerschnittstelle (200) zumindest ein Bedienelement (202) umfasst, und mit einem Gehäuse (110), wobei das Gehäuse (110) zumindest die Steuereinheit (170) und die Benutzerschnittstelle (200) zumindest teilweise aufnimmt,
**dadurch gekennzeichnet, dass**
die Handwerkzeugmaschine (100) eine Positioniervorrichtung (300) aufweist, wobei die Benutzerschnittstelle (200) unter Verwendung der Positioniervorrichtung (300) sich an dem Steuereinheitengehäuse (174) abstützt.

2. Handwerkzeugmaschine (100) nach Anspruch 1, **dadurch gekennzeichnet, dass** die Positioniervorrichtung (300) zumindest ein Positionierelement (310) aufweist, wobei das Positionierelement (310) dazu ausgebildet ist, die Benutzerschnittstelle (200) zumindest abschnittsweise überlappend zur Steuereinheit (170) anzuordnen.

3. Handwerkzeugmaschine (100) nach Anspruch 1 oder 2, **dadurch gekennzeichnet, dass** das Positionierelement (310) zumindest teilweise in die Benutzerschnittstelle (200) eingreift.

4. Handwerkzeugmaschine (100) nach Anspruch 3, **dadurch gekennzeichnet, dass** die Benutzerschnittstelle (200) eine Benutzerschnittstellenplatine (250) aufweist, wobei die Benutzerschnittstellenplatine (250) zumindest eine Durchgangsöffnung (252) umfasst, und das Positionierelement (310) dazu ausgebildet ist, durch die Durchgangsöffnung (252) durchzugreifen.

5. Handwerkzeugmaschine (100) nach Anspruch 3 oder 4, **dadurch gekennzeichnet, dass** die Benutzerschnittstelle (200) zumindest ein Trägerelement (220) aufweist, wobei das Trägerelement (220) zumindest ein Aufnahmeelement (222) umfasst, und das Positionierelement (310) in das Aufnahmeelement (222) des Trägerelements (220) eingreift.

6. Handwerkzeugmaschine (100) nach einem der Ansprüche 3 bis 5, **dadurch gekennzeichnet, dass** das Positionierelement (310) stiftartig ausgebildet ist.

7. Handwerkzeugmaschine (100) nach einem der vorhergehenden Ansprüche, **dadurch gekennzeichnet, dass** das Positionierelement (310) die Benutzerschnittstelle (200) zumindest teilweise umgreift.

8. Handwerkzeugmaschine (100) nach Anspruch 7, **dadurch gekennzeichnet, dass** das Positionierelement (310) als ein zumindest teilweise umlaufender Rahmen (315) ausgebildet ist.

9. Handwerkzeugmaschine (100) nach einem der vorhergehenden Ansprüche, **dadurch gekennzeichnet, dass** die Positioniervorrichtung (300) zumindest ein Abstützelement (320, 322, 324, 326) aufweist, wobei die Benutzerschnittstelle (200) an dem Abstützelement (320, 322, 324, 326) anliegt und das Abstützelement (320, 322, 324, 326) dazu ausgebildet ist, auftretende Bedienkräfte in das Gehäuse (110) abzuleiten.

10. Handwerkzeugmaschine (100) nach einem der vorhergehenden Ansprüche, **dadurch gekennzeichnet, dass** die Positioniervorrichtung (300) ein weiteres Positionierelement (330) zur Zentrierung der Benutzerschnittstelle (200) relativ zu einer Gehäuseöffnung (109) aufweist und die Benutzerschnittstelle (200) ein Verbindungselement (260) aufweist, wobei das Verbindungselement (260) dazu ausgebildet ist, das weitere Positionierelement (330) aufzunehmen.

11. Handwerkzeugmaschine (100) nach einem der vorhergehenden Ansprüche, **dadurch gekennzeichnet, dass** die Positioniervorrichtung (300) zumindest ein Begrenzungselement (340) aufweist und die Steuereinheit (170) eine Steuereinheitenplatine (172) umfasst, wobei die Steuereinheitenplatine (172) an dem Begrenzungselement (340) anliegt und das Begrenzungselement (340) dazu ausgebildet ist, die Steuereinheitenplatine (172) relativ zu der Benutzerschnittstelle (200) anzuordnen.

12. Handwerkzeugmaschine (100) nach einem der vorhergehenden Ansprüche, **dadurch gekennzeichnet, dass** das Steuereinheitengehäuse (174) die Positioniervorrichtung (300) ausbildet.

13. Handwerkzeugmaschine (100) nach einem der vorhergehenden Ansprüche, **dadurch gekennzeichnet, dass** die Benutzerschnittstelle (200) elektrisch leitend mit der Steuereinheit (170) verbunden ist.

## Claims

1. Hand-held power tool (100) having a drive unit (111), the drive unit (111) being actuatable by means of at least one manual switch (128), having a control unit (170) at least for controlling the drive unit (111), the control unit (170) having a control-unit housing (174), having at least one user interface (200), the user interface (200) comprising at least one operating element (202), and having a housing (110), the housing (110) at least partially accommodating at least the control unit (170) and the user interface (200),
**characterized in that**
the hand-held power tool (100) has a positioning device (300), the user interface (200) being supported on the control-unit housing (174) by use of the positioning device (300).

2. Hand-held power tool (100) according to Claim 1, **characterized in that** the positioning device (300) has at least one positioning element (310), the positioning element (310) being designed to locate the user interface (200) so as to at least partially overlap the control unit (170).

3. Hand-held power tool (100) according to Claim 1 or 2, **characterized in that** the positioning element (310) engages at least partially in the user interface (200).

4. Hand-held power tool (100) according to Claim 3, **characterized in that** the user interface (200) has a user-interface circuit board (250), the user-interface circuit board (250) comprising at least one through-opening (252), and the positioning element (310) being designed to extend through the through-opening (252).

5. Hand-held power tool (100) according to Claim 3 or 4, **characterized in that** the user interface (200) has at least one carrier element (220), the carrier element (220) comprising at least one receiving element (222), and the positioning element (310) engaging in the receiving element (222) of the carrier element (220).

6. Hand-held power tool (100) according to any one of Claims 3 to 5, **characterized in that** the positioning element (310) is realized in the manner of a pin.

7. Hand-held power tool (100) according to any one of the preceding claims, **characterized in that** the positioning element (310) at least partially encompasses the user interface (200).

8. Hand-held power tool (100) according to Claim 7, **characterized in that** the positioning element (310) is realized as an at least partially circumferential frame (315) .

9. Hand-held power tool (100) according to any one of the preceding claims, **characterized in that** the positioning device (300) has at least one support element (320, 322, 324, 326), the user interface (200) bearing against the support element (320, 322, 324, 326), and the support element (320, 322, 324, 326) being designed to divert occurring operating forces into the housing (110).

10. Hand-held power tool (100) according to any one of the preceding claims, **characterized in that** the positioning device (300) has a further positioning element (330), for centering the user interface (200) relative to a housing opening (109), and the user interface (200) has a connection element (260), the connection element (260) being designed to receive the further positioning element (330).

11. Hand-held power tool (100) according to any one of the preceding claims, **characterized in that** the positioning device (300) has at least one delimiting element (340), and the control unit (170) comprises a control-unit circuit board (172), the control-unit circuit board (172) bearing against the delimiting element (340), and the delimiting element (340) being designed to locate the control-unit circuit board (172) relative to the user interface (200).

12. Hand-held power tool (100) according to any one of the preceding claims, **characterized in that** the control-unit housing (174) realizes the positioning device (300).

13. Hand-held power tool (100) according to any one of the preceding claims, **characterized in that** the user interface (200) is connected in an electrically conductive manner to the control unit (170).

## Revendications

1. Machine-outil manuelle (100) avec une unité d'entraînement (111), l'unité d'entraînement (111) pouvant être actionnée au moyen d'au moins un interrupteur manuel (128), avec une unité de commande (170) au moins pour la commande de l'unité d'entraînement (111), l'unité de commande (170) présentant un boîtier d'unité de commande (174), avec au moins une interface utilisateur (200), l'interface utilisateur (200) comprenant au moins un élément de commande (202), et avec un boîtier (110), le boîtier (110) recevant au moins partiellement l'unité de commande (170) et l'interface utilisateur (200),
**caractérisée en ce que**
la machine-outil manuelle (100) présente un dispositif de positionnement (300), l'interface utilisateur (200) s'appuyant sur le boîtier d'unité de commande (174) en utilisant le dispositif de positionnement (300).

2. Machine-outil manuelle (100) selon la revendication 1, **caractérisée en ce que** le dispositif de positionnement (300) présente au moins un élément de positionnement (310), l'élément de positionnement (310) étant configuré pour agencer l'interface utilisateur (200) au moins par sections en chevauchement avec l'unité de commande (170).

3. Machine-outil manuelle (100) selon la revendication 1 ou 2, **caractérisée en ce que** l'élément de positionnement (310) s'engage au moins partiellement dans l'interface utilisateur (200).

4. Machine-outil manuelle (100) selon la revendication 3, **caractérisée en ce que** l'interface utilisateur (200) présente une carte d'interface utilisateur (250), la carte d'interface utilisateur (250) comprenant au moins une ouverture de passage (252), et l'élément de positionnement (310) étant configuré pour s'engager à travers l'ouverture de passage (252).

5. Machine-outil manuelle (100) selon la revendication 3 ou 4, **caractérisée en ce que** l'interface utilisateur (200) présente au moins un élément de support (220), l'élément de support (220) comprenant au moins un élément de réception (222), et l'élément de positionnement (310) s'engageant dans l'élément de réception (222) de l'élément de support (220).

6. Machine-outil manuelle (100) selon l'une quelconque des revendications 3 à 5, **caractérisée en ce que** l'élément de positionnement (310) est configuré sous forme de broche.

7. Machine-outil manuelle (100) selon l'une quelconque des revendications précédentes, **caractérisée en ce que** l'élément de positionnement (310) entoure au moins partiellement l'interface utilisateur (200).

8. Machine-outil manuelle (100) selon la revendication 7, **caractérisée en ce que** l'élément de positionnement (310) est configuré sous la forme d'un cadre (315) au moins partiellement périphérique.

9. Machine-outil manuelle (100) selon l'une quelconque des revendications précédentes, **caractérisée en ce que** le dispositif de positionnement (300) présente au moins un élément d'appui (320, 322, 324, 326), l'interface utilisateur (200) reposant sur l'élément d'appui (320, 322, 324, 326) et l'élément d'appui (320, 322, 324, 326) étant configuré pour dériver dans le boîtier (110) les forces de commande qui se produisent.

10. Machine-outil manuelle (100) selon l'une quelconque des revendications précédentes, **caractérisée en ce que** le dispositif de positionnement (300) présente un autre élément de positionnement (330) pour centrer l'interface utilisateur (200) par rapport à une ouverture de boîtier (109) et l'interface utilisateur (200) présente un élément de liaison (260), l'élément de liaison (260) étant configuré pour recevoir l'autre élément de positionnement (330).

11. Machine-outil manuelle (100) selon l'une quelconque des revendications précédentes, **caractérisée en ce que** le dispositif de positionnement (300) présente au moins un élément de limitation (340) et l'unité de commande (170) comprend une carte d'unité de commande (172), la carte d'unité de commande (172) reposant sur l'élément de limitation (340) et l'élément de limitation (340) étant configuré pour agencer la carte d'unité de commande (172) par rapport à l'interface utilisateur (200).

12. Machine-outil manuelle (100) selon l'une quelconque des revendications précédentes, **caractérisée en ce que** le boîtier d'unité de commande (174) forme le dispositif de positionnement (300).

13. Machine-outil manuelle (100) selon l'une quelconque des revendications précédentes, **caractérisée en ce que** l'interface utilisateur (200) est reliée de manière électriquement conductrice à l'unité de commande (170).
